(19) **Europäisches Patentamt**
**European Patent Office**
**Office européen des brevets**

(11) **EP 2 416 034 B1**

(12) **EUROPEAN PATENT SPECIFICATION**

(45) Date of publication and mention
of the grant of the patent:
**18.09.2013 Bulletin 2013/38**

(21) Application number: **10758562.2**

(22) Date of filing: **26.03.2010**

(51) Int Cl.:
*F16H 7/06* (2006.01)    *F16G 13/04* (2006.01)
*F16G 13/06* (2006.01)

(86) International application number:
**PCT/JP2010/055348**

(87) International publication number:
**WO 2010/113790 (07.10.2010 Gazette 2010/40)**

(54) **SILENT CHAIN TRANSMISSION**

LAUTLOSER KETTENANTRIEB

TRANSMISSION PAR CHAÎNE SILENCIEUSE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **30.03.2009 JP 2009081710**

(43) Date of publication of application:
**08.02.2012 Bulletin 2012/06**

(73) Proprietors:
• **Honda Motor Co., Ltd.**
**Minato-ku**
**Tokyo 107-8556 (JP)**
• **Hitachi Powdered Metals Co., Ltd.**
**Matsudo-shi**
**Chiba 270-2295 (JP)**

(72) Inventors:
• **FUJIWARA Akira**
**Wako-shi**
**Saitama 351-0193 (JP)**
• **HASEGAWA Masao**
**Matsudo-shi**
**Chiba 270-2295 (JP)**

(74) Representative: **Herzog, Markus et al**
**Weickmann & Weickmann**
**Patentanwälte**
**Postfach 86 08 20**
**81635 München (DE)**

(56) References cited:
**WO-A1-2007/070830    JP-A- 2003 202 056
JP-A- 2006 300 218    JP-T- 2008 510 949
US-A1- 2003 125 146**

**Description**

Technical Field

The present invention is related to a silent chain transmission that is used as a power transmission of, for example, an internal combustion engine.

Background Art

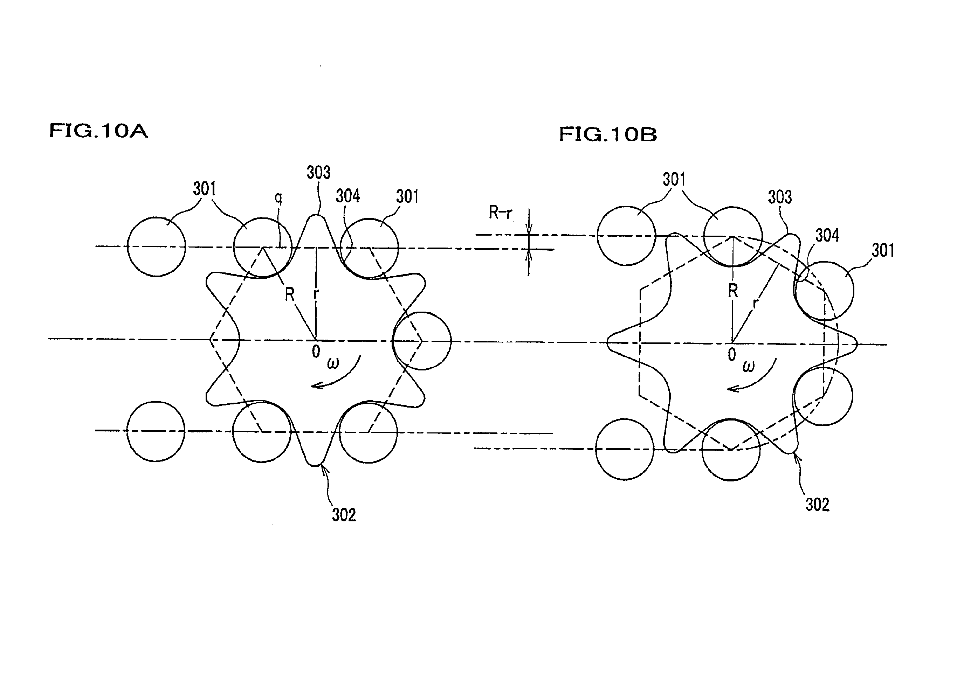

First, the principle of generation of a noise by a transmission, for which a chain is used, will be described with reference to FIGS. 10A and 10B.
FIGS. 10A and 10B are side views that schematically show states of engagement between a conventional chain and a conventional sprocket wheel.
In this example, a sprocket wheel 302 has six tooth portions 303 and six root portions 304, wherein a chain 301 (roller) gets seated on a root portion 304.
Herein, distance R represents the distance from the center of the chain 301 seated on the root portion 304 to the rotation center O of the sprocket wheel 302. Distance r represents the distance from line q connecting the centers of chains 301 seated on root portions 304 to the rotation center O of the sprocket wheel 302. The sprocket wheel 302 rotates at an angular speed ω.

As shown in FIG. 10A, when a tooth portion 303 of the sprocket wheel 302 is positioned exactly above the rotation center O, the speed V of the chain 301 is at the minimum value Vmin=rω.
On the other hand, as shown in FIG. 10B, when a root portion 304 of the sprocket wheel 302 is positioned exactly above the rotation center O, the speed V of the chain 301 is at the maximum value Vmax=Rω.
That is, the speed V of a chain 301 does not maintain a constant value, but repeatedly varies at each pitch of tooth portion 303 of the sprocket wheel 302 within a range from the minimum value Vmin= rω to the maximum value Vmax=Rω.

Such variation (also referred to as 'string displacement') in the speed V of the chain 301 accompanying the polygon movement of the sprocket wheel acts as a vibrating force to vibrate the bearing of the sprocket wheel 302, the cover of the transmission, and the like, which is a cause of generation of noises.
Further, the difference between the distance R and the distance r (R-r) makes collision between the sprocket wheel 302 and chains 301 hard, causes hitting sounds, and also vibrates the bearing of the sprocket wheel 302, thus causing noises.

In order to reduce noises generated on such a principle, for example, Patent Document 1 discloses a silent chain transmission arranged such that each link plate of a silent chain is provided with an inner flank surface and an outer flank surface with the same shape as an outline formed with the tooth shape of the cross-section, with respect to the hob axial direction, of a hob cutter that creates the tooth portions of a sprocket wheel, and each tooth top portion of the sprocket wheel is formed such as to avoid contact interference with the inner flan surface of a link plate.

Patent Document 1: Japanese Patent No. 3585463 B2,

corresponding to JP 2003 202 056 A and US 2003 125146 A1, on which the preamble of claim 1 is based.

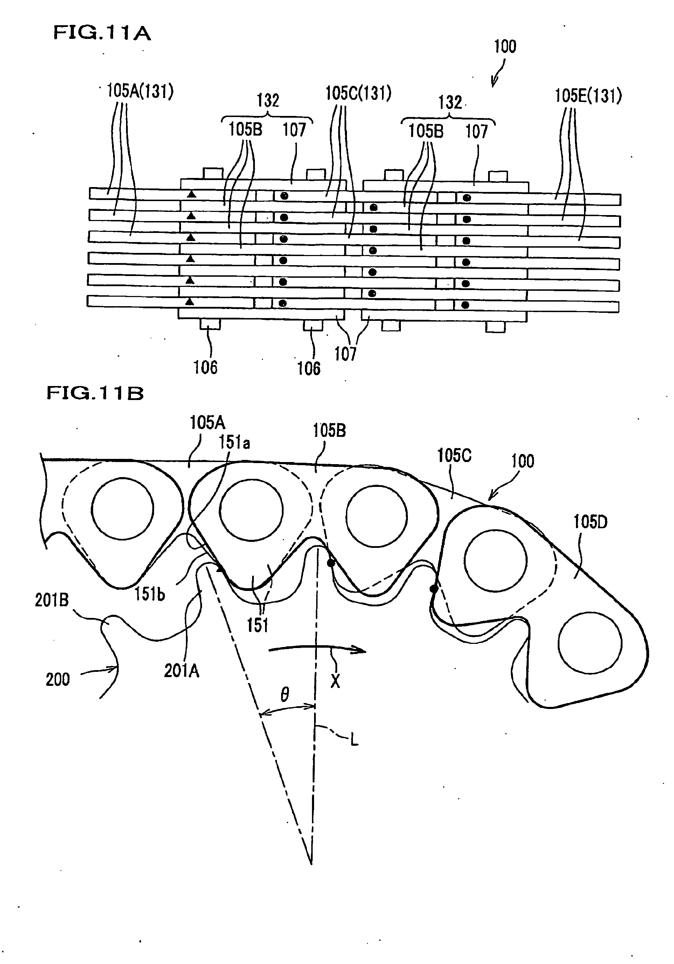

FIGS. 11A and 11B are diagrams showing a state of engagement of a conventional silent chain transmission, wherein FIG. 11A is a plan view and FIG. 11B is a side view.
In FIG. 11A, the part of each link plate 105, where the outer flank surface 151a of the link plate 105 contacts with a tooth portion 201 of a sprocket wheel 200, is represented by a black solid circle mark; and the part of each link plate 105, where the inner flank surface 151b of the link plate 105 contacts with a tooth portion 201 of the sprocket wheel 200, is represented by a black solid triangle mark. Further, suffixes A to E are added to symbols 105 to distinguish the respective link plates 105. In FIG. 11B, guide plates 107 are not shown.

The silent chain transmission described in Patent Document 1 is arranged such that an engagement position moves from the inner flank surface 151b to the outer flank surface 151 a of a link plate 105, accompanying the rotation of the sprocket wheel 200.
Concretely, as shown in FIGS. 11A and 11B, in a case of a conventional silent chain transmission, the inner flank surfaces 151b, 151b of the front tooth portions 151 of two link plates 105A that form a link row 131 slidingly start contact with the inner flank seat portion of a tooth portion 201 A of the sprocket wheel 200 (refer to the black solid triangle mark in FIG. 11A), at a position that is behind by an angle θ (for example, θ= approximately 20 degrees) in the direction opposite to the rotation direction X, with respect to a reference line L that is drawn from the rotation center of the sprocket wheel 200 along a direction perpendicular to a linear portion of a silent chain 100. At this moment, the outer flank surfaces 151a, 151a of the tooth portions 151 of two link plates 105B that form a guide row 132 are not in contact with the tooth portion 201A of the sprocket wheel 200.

Though not shown, when the sprocket wheel 200 rotates, the silent chain 100 moves; the outer flank surfaces 151 a, 151 a of the rear tooth portions 151 of the two link plates 105B of a guide row 132, which is at a position ahead of the link plates 105A by a half of the length of a link plate in the moving direction, start contact with the outer flank seat portion of the tool portion 201A of the sprocket wheel 200 (refer to the black solid circle marks in FIG. 11A); and the inner flank surfaces 151b of the tooth portions 151 of the link plates 105A separate upward from the tooth portion 201A of the sprocket wheel 200.

Disclosure of the Invention

Problems to be Solved by the Invention

However, in the silent chain transmission described in Patent Document 1, accompanying the rotation of the sprocket wheel 200, although an engagement position moves from the inner flank surface 151b of one link plate 105A to the outer flank surface 151 a of another link plate 105B that is ahead by the half of the length of a link plate, only one of the group of the inner flank surfaces 151b and the group of the outer flank surfaces 151a of four tooth portions 151, that are at the same position with respect to the lateral direction of the silent chain 100, is in a state of contacting with or being seated on the sprocket wheel 200. Accordingly, the contact surface pressure applied to the tooth portions 151 (201) is high, which causes early abrasion of the sprocket wheel 200 and the link plates 105.

The present invention has been developed to solve these problems, and an object of the invention is to provide a silent chain transmission capable of reducing abrasion of tooth portions.

Means for Solving the Problems

A silent chain transmission according to the present invention includes: a silent chain formed by connecting a plurality of link plates each of which has a pair of tooth portions and a pair of pin holes through which a connection pin is loose-fitted, the paired tooth portions and the paired pin holes being formed in a forward-and-backward drive direction, the plurality of link plates being connected in a continuous chain shape by the pins; and a sprocket wheel having a plurality of tooth portions at an outer circumferential portion thereof, wherein the plurality of tooth portions engage with the tooth portions of the silent chain, wherein an inner flank surface of the front tooth portion of the each one link plate and an outer flank surface of the rear tooth portion of another link plate that is ahead of the one link plate simultaneously come in contact with the same engagement surface of one tooth portion of the sprocket wheel, and engagement between the one link plate and the sprocket wheel thereby starts, wherein, accompanying rotation of the sprocket wheel, while contact of the inner flank surface of the front tooth portion of the one link plate and the outer flank surface of the rear tooth portion of the other link plate that is ahead of the one link plate, with the same engagement surface of the one tooth portion of the sprocket wheel, is maintained, an outer flank surface of the rear tooth portion of the one link plate and an inner flank surface of the front tooth portion of another link plate that is behind the one link plate simultaneously come in contact with the same engagement surface of another tooth portion of the sprocket wheel that is behind the one tooth portion of the sprocket wheel, and wherein, in order that the one link plate thereby gets seated on the sprocket wheel, a distance $\alpha$ from a line which connects centers of the pin holes of the one link plate to a center of the inner flank surface, and a distance $\beta$ from the line which connects the centers of the pin holes of the one pin plate to tops of the tooth portions, satisfy a relationship expressed by $3.5\alpha \leq \beta \leq 3.8\alpha$.

Herein, the same engagement surface of a tooth portion of the sprocket wheel refers to a surface that is on the sprocket- rotation forward- side with respect to the line that connects the center of the sprocket wheel and the top of the tooth portion of the sprocket wheel.

With this arrangement, the inner flank surface of the front tooth portion of one link plate and the outer flank surface of the rear tooth portion of another link plate that is ahead of this one link plate simultaneously start contact with one tooth portion of the sprocket wheel. That is, the tooth portions of all link plates that are superposed with each other with respect to the lateral direction of the silent chain simultaneously start contact with a tooth portion of the sprocket wheel. Then, while this state is maintained, the link plates get seated on the sprocket wheel. Accordingly, compared with a conventional silent chain transmission, a load applied to a tooth portion of the sprocket wheel is distributed. Thus, abrasion of tooth portions can be reduced, and uneven abrasion can be prevented.

Further, it is preferable that, before the silent chain is curved by the sprocket wheel, the inner flank surface of the front tooth portion of the one link plate and the outer flank surface of the rear tooth portion of the other link plate that is ahead of the one link plate simultaneously come in contact with the one tooth portion of the sprocket wheel.

With this arrangement, it is possible to reduce generation of polygon movement that occurs when the silent chain and the sprocket wheel engage with each other.

Further, with this arrangement, regarding one link plate, while the state that the inner flank surface of the front tooth portion is in contact is maintained, the outer flank surface of the rear tooth portion comes in contact with the tooth portion of the sprocket wheel, and a force thereby acts such as to push the link plate toward the rotation direction. This force acts such as to reduce the engagement load acting on the engagement surface of the tooth portion of the sprocket wheel at the time the silent chain winds around the sprocket wheel. It is thereby possible to attain a long lifetime of the sprocket wheel and the silent chain, and also to further reduce noises.

Still further, it is preferable that the silent chain includes a plurality of link rows each having two or one link plate, and a plurality of guide rows each having two guide plates and two or more link plates, and wherein the plurality of link rows and the plurality of guide rows are connected through pins alternatively and in a continuous chain form.

Yet further, it is preferable that a thickness of the link plates of the link rows of the silent chain is larger than a thickness of the guide plates of the guide rows and larger than a thickness of the link plates of the guide plates.

Further, it is preferable that a thickness of the link plates of the link rows is larger than a thickness of the guide plates of the guide rows and larger than a thickness of the link plates of the guide rows.

Still further, it is preferable that each tooth portion of the sprocket wheel is provided with an inner flank seat portion where the inner flank surface of the front tooth portion of the each one link plate gets seated, and an outer flank seat portion where the outer flank surface of the rear tooth portion of another link plate that is ahead of the one link plate gets seated.

With this arrangement, the inner flank surface of a link plate gets seated on the inner flank seat portion formed on a tooth portion of the sprocket wheel, and besides, the outer flank surface of a link plate that is ahead gets seated on the outer flank seat portion of the same tooth portion. Accordingly, engagement between the sprocket wheel and the link plates is performed smoothly and correctly, and it is thereby possible to absorb the shock caused by contact between them and reduce noises.

Further, the outer flank surface of one link plate is supported by the outer flank seat portion of a tooth portion of the sprocket wheel, and besides, the inner flank surface of the same link plate is supported by the inner flank seat portion of a tooth portion, of the sprocket wheel, that is ahead. Accordingly, load applied to the respective tooth portions of the link plates and the sprocket wheel is distributed, and it is thereby possible to reduce abrasion of the tooth portions of the sprocket wheel and the link plates.

Still further, it is preferable that each outer flank seat portion of the sprocket wheel has a shape that is created using a rack, for outer flanks, having the same shape as an outer shape of tooth portions, wherein the outer shape are formed by linearly aligning outer flank link plates whose inner flank surfaces and outer flank surfaces are formed in the same shape as the outer flank surfaces of the link plates, and wherein each inner flank seat portion of the sprocket wheel has a shape that is created using a rack, for inner flanks, having the same shape as an outer shape of tooth portions, the outer shape being formed by linearly aligning inner flank link plates whose inner flank surfaces and outer flank surfaces are formed in the same shape as the inner flank surfaces of the link plates.

Advantage

According to the present invention, it is possible to provide a silent chain transmission capable of reducing the abrasion of tooth portions.

Brief Description of the Drawings

FIG. 1 is a side view schematically showing a silent chain transmission in the present embodiment;
FIGS. 2A, 2B, and 2C are diagrams showing the structure of a silent chain, wherein FIG. 2A is a plan view, FIG. 2B is a side view, and FIG. 2C is an exploded perspective view;
FIG. 3 is a side view of a link plate;
FIG. 4 is an enlarged side view of a sprocket wheel;
FIGS. 5A to 5C are illustrations of tools for creating tooth portions of the sprocket wheel, wherein FIG. 5A is a side view of a virtual outer flank link plate, FIG. 5B is a side view of a state of aligning virtual outer flank link plates on a line, and FIG. 5C is a side view of a rack for outer flanks;
FIGS. 6A to 6C are illustrations of tools for creating the tooth portions of the sprocket wheel, wherein FIG. 6A is a side view of a virtual inner flank link plate, FIG. 6B is a side view of a state of aligning virtual inner flank link plates on a line, and FIG. 6C is a side view of a rack for inner flanks;
FIGS. 7A to 7C are illustrations showing a state of engagement in the silent chain transmission in the present embodiment, wherein FIG. 7A is a plan view, FIG. 7B is a side view, and FIG. 7C is an enlarged view of the portion A in FIG. 7B;
FIGS. 8A and 8B are graphs showing the transition of engagement loads that act between a tooth portion of a link plate and a tooth portion of the sprocket wheel, wherein FIG. 8A shows measurement values on the silent chain transmission in the present embodiment, and FIG. 8B shows measurement values on a conventional (Patent Document 1) silent chain transmission;

FIGS. 9A and 9B are graphs showing the relationship between the string vibration amount of the silent chain and the sprocket angle, wherein FIG. 9A shows measurement values on the silent chain transmission in the present embodiment, and FIG. 9B shows measurement values on the conventional (Patent Document 1) silent chain transmission;

FIGS. 10A and 10B are side views schematically showing the engagement state between a conventional chain and a conventional sprocket wheel; and

FIGS. 11A and 11B are diagrams showing an engagement state in a conventional silent chain transmission, wherein FIG. 11A is a plan view, and FIG. 11B is a side view.

Best Mode for Carrying Out the Invention

An embodiment in the best mode for carrying out the invention will be described in detail with reference to the drawings. In the following description, the same reference numeral will be assigned to the same element, and overlapping description will be omitted.

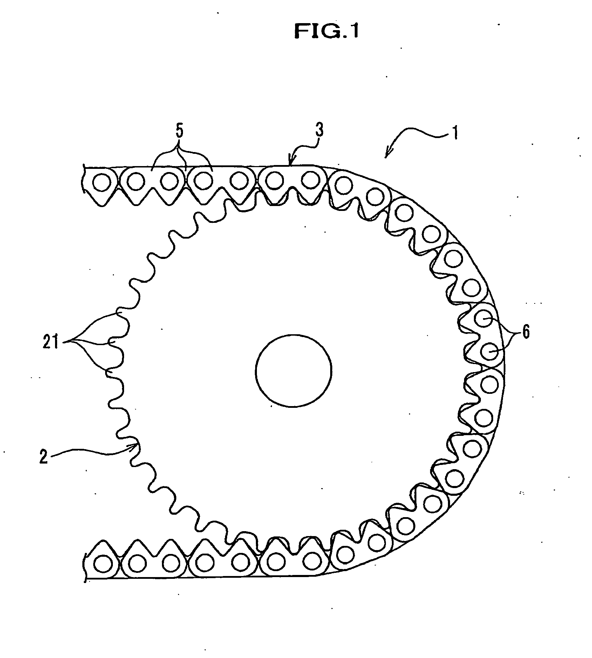

As shown in FIG. 1, a silent chain transmission 1 in the present embodiment is an apparatus used, for example, as a timing chain transmission of an internal-combustion engine of an automobile or a general-purpose machine, or as a chain transmission for driving an auxiliary device, such as an oil pump. The silent chain transmission 1 includes a drive sprocket wheel 2, a driven sprocket wheel (not shown) arranged separately from the drive sprocket wheel 2, and a silent chain 3 that is in an endless form and wound around the drive sprocket wheel 2 and the driven sprocket wheel (not shown).

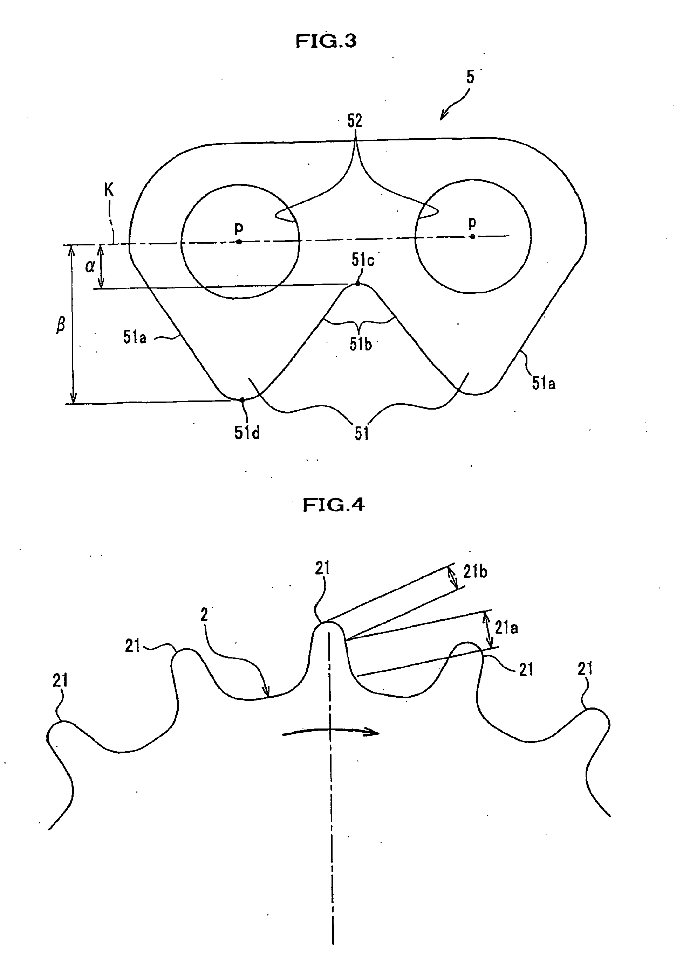

The drive sprocket wheel 2 (hereinafter, referred to merely as 'sprocket wheel 2') is provided, at the circumference thereof, with a plurality of tooth portions 21 that engage with the tooth portions of the silent chain 3. The sprocket wheel 2 is, for example, connected with the crankshaft of an internal combustion engine, and rotates, accompanying the operation of the internal combustion engine. The shape of each tooth portion 21 of the sprocket wheel 2 will be described later in detail with reference to FIG. 3.

The driven sprocket wheel has a structure that is substantially the same as that of the sprocket wheel 2, and detailed description will be accordingly omitted.

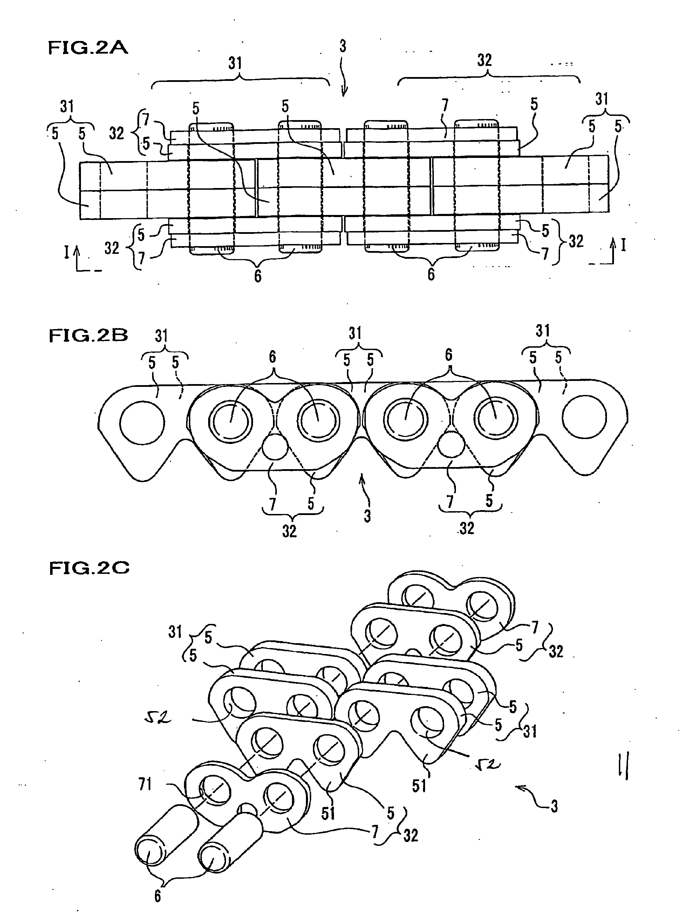

The silent chain 3 is formed, as shown in FIG. 2A to 2C, by connecting a plurality of link plates 5 with connecting pins 6 in a continuously-chained and endless form. Concretely, two link plates 5, 5 are arranged adjacent to each other to form a link row 31, and one link plate 5 and one guide plate 7 are arranged on both outer sides of the link row 31 to form respective guide rows 32. The silent chain 3 is arranged by connecting such link rows 31 and guide rows 32 with connecting pins 6 in a continuously-chained and endless form.

Further, for the silent chain 3 in the present embodiment, the thickness of the link plates 5 of a link row 31 is preferably larger than the thickness of the guide plate 7 and the thickness of the link plate 5 of a guide row 32.

This arrangement is aimed at the following. That is, with this arrangement, the thickness of the respective plates (link plates 5) of link rows 31 is larger than the thickness of the respective plates (the guide plates 7 and the link plates 5), of guide rows 32, which are in a larger number than the number of the plates of the link rows 31. Accordingly, compared with a case of making the thicknesses of respective plates of the link rows 31 and the link rows 32 to be the same, a tension load that acts at the time of operation of the chain can be distributed to respective plates with an excellent balance, and the stretch of the chain can be thereby reduced.

Further, preferably, the total of the thicknesses of the link plates 5 of a link row 31 is the same as the total of the thicknesses of the guide plates 7 and the link plates 5 of a guide row 32.

This arrangement is aimed at the following. That is, a tension load that acts at the time of operation of the chain can be distributed substantially evenly to the respective link plates of the link rows 31 and the respective link plates 5 and guide plates 7 of the guide rows 32, and the stretch of the chain can be thereby further reduced.

As shown in FIG. 2C, a guide plate 7 is arranged at both ends of a connecting pin 6. A guide plate 7 is provided with a pair of pin holes 71, 71 separated from each other along the driving forward-and-backward direction of the silent chain 3. The inner diameter of a pin hole 71 is formed a little smaller than the outer diameter of the connecting pin 6 so that the connecting pin 6 is fitted inside the pin hole with pressure. A guide plate 7 does not have a tooth portion.

As shown in FIG. 3, a link plate 5 has a pair of tooth portions 51, 51 which are substantially in a triangle shape in a side view and separated from each other along the driving forward-and-backward direction of the silent chain 3. The shape of the outer flank surface 51a of a tooth portion 51 is not particularly limited, and is formed, for example, in a linear shape or in an arc shape concaved outward. The shape of the inner flank surface 51b of the tooth portion 51 is not particularly limited, and is formed, for example, in an arc shape convexed outward or in an involute curve shape.

Further, each link plate 5 has a pair of pin holes 52, 52 which are separated from each other along the driving forward-and-backward direction of the silent chain 3. The inner diameter of a pin hole 52 is formed a little larger than the outer diameter of a connecting pin 6 so that the connecting pin 6 can be loose-fitted.

The link plate 5 of a guide row 32 is formed with a thickness smaller than the thickness of the link plate 5 of a link row 31.

The respective link plates 5 are connected in a continuously-chained and endless shape by connecting pins 6 with the tooth portions 5 facing inward.

As shown in FIG. 3, the distance $\alpha$ from a line K connecting the centers p, p of the pin holes 52 of a link plate 5 to the inner flank surface center 51c and the distance $\beta$ from the line K to the tops 51 d of the tooth portions 51 are set such as to satisfy Expression (1).

$$3.5\alpha{\leq}\beta{\leq}3.8\alpha...\text{Expression (1)}$$

That is, by setting the dimensions of the tooth portions 51 of a link plate 5 such as to satisfy Expression (1), it is possible to make the timing of seating of an outer flank surface 51 a earlier compared with a case of a conventional silent chain. The range of $\beta$ is preferably $3.5\alpha{\leq}\beta{\leq}3.8\alpha$, and further preferably $3.65\alpha{\leq}\beta{\leq}3.74\alpha$.

The sprocket wheel 2 is, as shown in FIG. 4, has a plurality of tooth portions 21 on the outer circumferential surface thereof. In the present embodiment, the pitch between the tooth portions 21 of the sprocket wheel 2 is set smaller than the pitch between tooth portions 51 of the link plates 5.

The engagement surface of each tooth portion 21 of the sprocket wheel 2 is provided on the tooth root side thereof with an outer flank seat portion 21a to slidingly contact with the outer flank surface 51a (refer to FIG. 3) of a link plate 5. Further, continuously from the outer flank seat portion 21a, an inner flank seat portion 21b to slidingly contact with the inner flank surface 51b (refer to FIG. 3) of the link plate 5 is formed on the tooth top side.

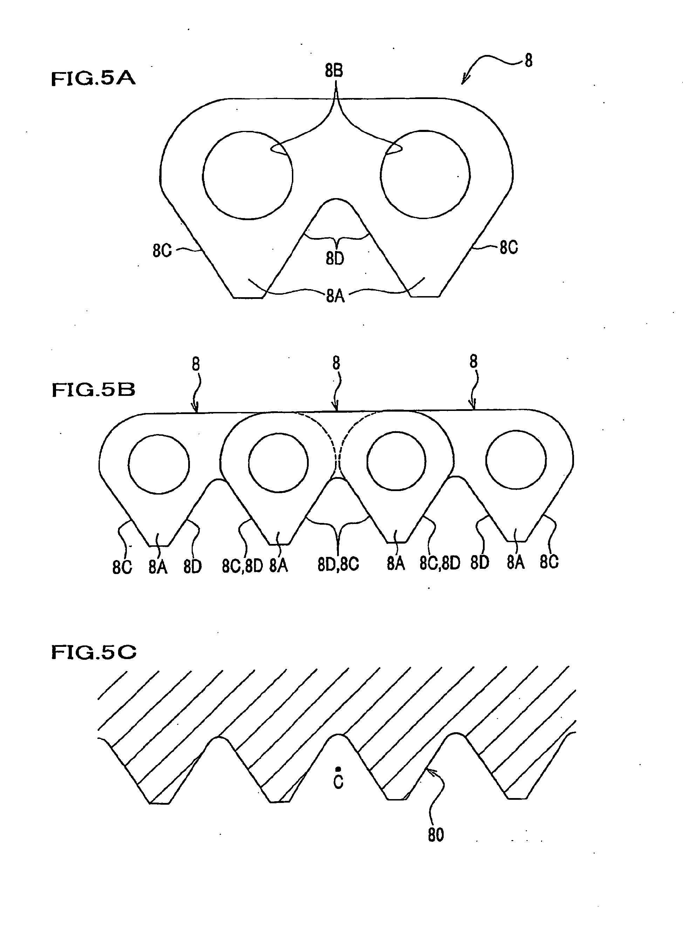

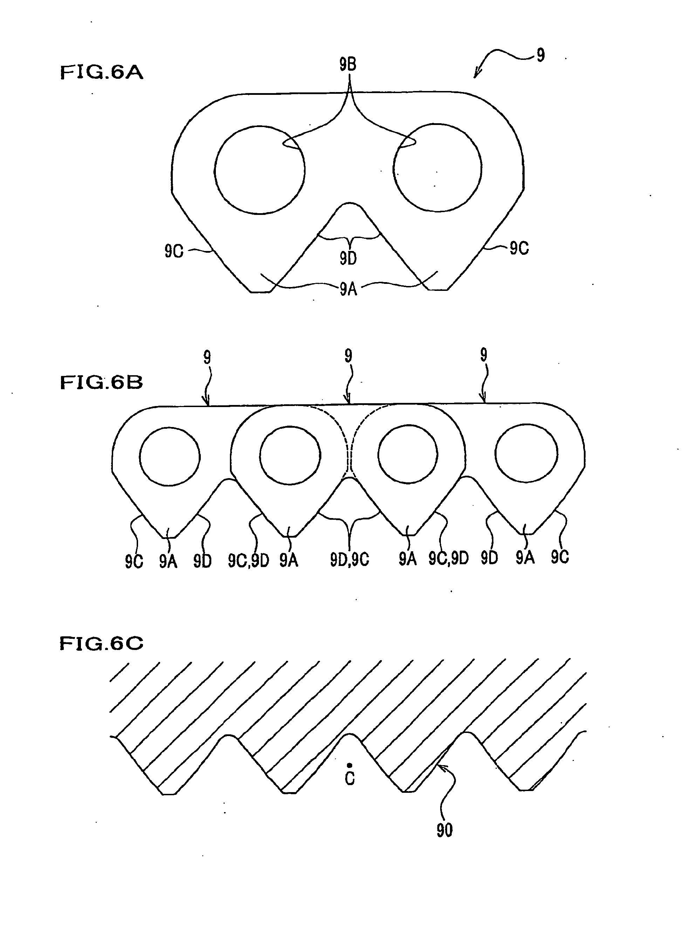

The shapes of the outer flank seat portions 21 a are not particularly limited, and are created, for example, using a rack in the same shape as the shapes of the outer flank surfaces 51a of link plates 5 (namely, a rack 80 in FIG. 5C, for outer flank surfaces, having the same shape as the outer shape of tooth portions that is formed by linearly aligning outer flank link plates 8 whose inner flank surfaces 8D and outer flank surfaces 8C shown in FIG. 5B are formed in the same shape as the outer flank surfaces 51 a of the link plates 5). The shapes of the inner flank seat portions 21b are not particularly limited, and are created, for example, using a rack in the same shape as the shapes of the inner flank surfaces 51b of link plates 5 (namely, a rack 90 in FIG. 6C, for inner flank surfaces, having the same shape as the outer shape of tooth portions that is formed by linearly aligning inner flank link plates 9 whose inner flank surfaces 9D and outer flank surfaces 9C shown in FIG. 6B are formed in the same shape as the inner flank surfaces 51b of the link plates 5). Thus, the inner flank surface 51b of a link plate 5 slidingly contacts with an inner flank seat portion 21b of the sprocket wheel, and the outer flank surface 51a of a link plate 5 slidingly contacts with an outer flank seat portion 21a of the sprocket wheel. It is thereby possible to make extremely faint noises that are generated when link plates 5 get seated on the sprocket wheel 2.

FIGS. 5A to 5C are illustrations of tools for creating the tooth portions of the sprocket wheel, wherein FIG. 5A is a side view of a virtual outer flank link plate, FIG. 5B is a side view of a state of aligning virtual outer flank link plates on a line, and FIG. 5C is a side view of a rack for outer flanks. FIGS. 6A to 6C are illustrations of tools for creating the tooth portions of the sprocket wheel, wherein FIG. 6A is a side view of a virtual inner flank link plate, FIG. 6B is a side view of a state of aligning virtual inner flank link plates on a line, and FIG. 6C is a side view of a rack for inner flanks.

Creation of the tooth portions 21 of the sprocket wheel 2 will be described below in more details with reference to FIG. 5A to Fig. 6C. The tooth portions 21 of the sprocket wheel 2 are created in two steps, using two gear cutting tools, namely the rack 80 for outer flank surfaces, and the rack 90 for inner flank surfaces,

As shown in FIG. 5B, in the first step of creation, the tooth portions 21 of the sprocket wheel 2 are created, based on a virtual outer flank link plate 8 having a desired outer shape. This virtual link plate 8 is provided with a pair of tooth portions 8A and a pair of pin holes 8B, and also provided with outer flank surfaces 8C and inner flank surfaces 8D. The outer flank surfaces 8C and the inner flank surfaces 8D of the outer flank link plate 8 are formed in the shapes same as the outer flank surfaces 51 a of a link plate 5.

The rack 80 (refer to FIG. 5C) for outer flanks is formed, as shown in FIG. 5B, such as to have the same shape as the tooth outer shape formed by aligning on a line a plurality of virtual outer flank link plates 8 each of which having the outer shape describe above.

Thus, in the first step of creation, the tooth portions 21 of the sprocket wheel 2 are formed into a tooth shape obtained by gear cutting by the use of the rack 80 for outer flanks.

Gear cutting by the rack 80 for outer flanks is performed, having the midpoint C be the center of rotation of the rack 80 for outer flanks. Herein, the midpoint C refers to a point on a line that is parallel to the rack 80 for outer flanks, wherein the width of a tooth portion of the rack 80 for outer flanks and the distance between tooth portions of the rack 80 for outer flanks are equal to each other on the line, and the midpoint C is the midpoint of the distance between tooth portions of the rack 80 for outer flanks.

As shown in FIG. 6B, in the second step of creation, the tooth portions 21 of the sprocket wheel 2 are created, based on a virtual inner flank link plate 9 having a desired outer shape. This virtual inner flank link plate 9 is provided with a pair of tooth portions 9A and a pair of pin holes 9B, and also provided with outer flank surfaces 9C and inner flank surfaces 9D. The outer flank surfaces 9C and the inner flank surfaces 9D of the inner flank link plate 9 are formed in the shapes same as the inner flank surfaces 51b of a link plate 5.

The rack 90 for inner flanks that creates the sprocket wheel 2 in the second step of creation has the same shape as the tooth outer shape formed by aligning on a line a plurality of virtual inner flank link plates 9, as shown in FIG. 6B (refer to FIG. 6C).

Thus, in the second step of creation, the tooth portions 21 of the sprocket wheel 2 are formed, on the top side of the tooth portions 21, into a tooth shape obtained by gear cutting by the use of the rack 90 for inner flanks.

Gear cutting by the rack 90 for inner flanks is performed, having the midpoint C be the center of rotation of the rack 90 for inner flanks. Herein, the midpoint C refers to a point on a line that is parallel to the rack 90 for inner flanks, wherein the width of a tooth portion of the rack 90 for inner flanks and the distance between tooth portions of the rack 90 for inner flanks are equal to each other on the line, and the midpoint C is the midpoint of the distance between tooth portions of the rack 90 for inner flanks.

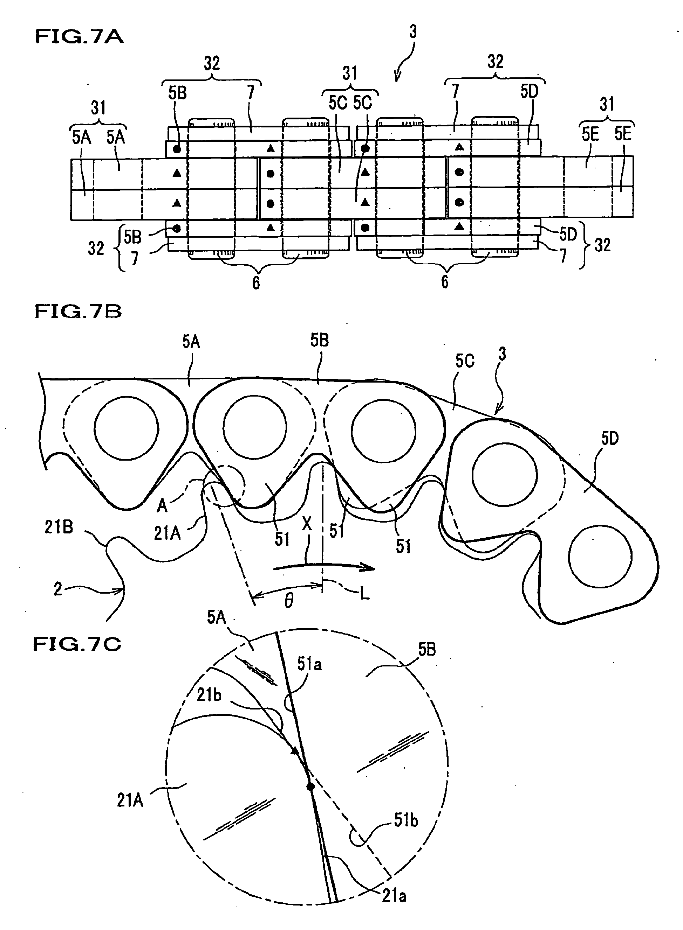

Through these two steps of creation, on the engagement surface of a tooth portion 21 of the sprocket wheel 2, an outer flank seat portion 21a that slidingly contacts with the outer flank surface 51a of a link plate 5 is formed on the tooth root side, as shown in FIG. 7, and an inner flank seat portion 21b that slidingly contacts with the inner flank surface 51b of the link plate 5 is formed on the same engagement surface, on the tooth top side, continuously with the outer flank seat portion 21a.

The engagement operation between the sprocket wheel 2 and the silent chain 3 will be described below with reference to FIGS. 7A to 7C.

FIGS. 7A to 7C are illustrations showing a state of engagement in the silent chain transmission in the present embodiment, wherein FIG. 7A is a plan view, FIG. 7B is a side view, and FIG. 7C is an enlarged view of the portion A in FIG. 7B.

The part of each link plate 5, where the outer flank surface 51a of the link plate 5 contacts with a tooth portion 21 of the sprocket wheel 2, is represented by a black solid circle mark; and the part of each link plate 5, where the inner flank surface 51b of the link plate 5 contacts with a tooth portion 21 of the sprocket wheel 2, is represented by a black solid triangle mark. Further, suffixes A to E are added to symbols 5 to distinguish the respective link plates 5. In FIG. 7B, guide plates 7 are not shown.

In the silent chain transmission 1 in the present embodiment, as shown in FIG. 7B, engagement between a tooth portion 51 of a link plate 5 and a tooth portion 21 of the sprocket wheel 2 starts before the silent chain 3 is curved by the sprocket wheel 2.

In more details, regarding the silent chain 3 in the present embodiment, as shown in FIGS. 7A, 7B, and 7C, the inner flank surfaces 51b, 51b of the front tooth portions 51 of two link plates 5A of a link row 31 start contact with the inner flank seat portion 21b (refer to FIG. 4) of a tooth portion 21A of the sprocket wheel 2, at a position that is behind by an angle $\theta$ (for example, $\theta$ = approximately 4 degrees) in the direction opposite to the rotation direction X, with respect to a reference line L drawn from the rotation center of the sprocket wheel 2 in a direction perpendicular to a linear portion of the silent chain 3. Simultaneously, the outer flank surfaces 51a, 51a of the rear tooth portions 51 of the two link plates 5B that form the guide row 32, which is positioned ahead of the link plates 5A by a half of the length of a link plate, start contact with the outer flank seat portion 21a (refer to FIG. 4) formed on the same engagement surface of the same tooth portion 21A.

That is, the tooth portions 51 of the four link plates 5A, 5A, 5B, 5B, which are superposed along the lateral direction of the silent chain 3, simultaneously come in contact one tooth portion 21A of the sprocket wheel 2.

Then, though not shown, if the sprocket wheel 2 rotates, then, while the contact state is maintained between the tooth portions 51 of the four link plates 5A, 5A, 5B, 5B, which are superposed along the lateral direction of the silent chain 3, and the same engagement surface of the tooth portion 21 A of the sprocket wheel 2, the silent chain 3 moves so that the outer flank surfaces 51 a of the rear tooth portions 51 of the two link plates 5A of the link row 31 come in contact with another tooth portion 21B, of the sprocket wheel 2, that is behind the tool portion 21A by one. The link plates 5A thereby get seated.

It is needless to say that, simultaneously, the inner flank surfaces 51b of the front tooth portions of the link plates 5, which are positioned behind the link plates 5A by the half length of a link plate 5 along the moving direction, start contact with the inner flank seat portion 21b formed on the same engagement surface of the tooth portion 21B of the sprocket wheel 2.

The same engagement surface of each tooth portion 21 of the sprocket wheel 2 refers to the surface on the front or forward side in the rotation direction of the sprocket with respect to the line that connects the center of the sprocket wheel 2 and the top of the each tooth portion.

In such a manner, the tooth portions 51 of all link plates 5 that are superposed along the lateral direction of the silent chain 3 contact with tooth portions 21 of the sprocket wheel 2. Accordingly, loads applied to the respective tooth portions 21 of the sprocket wheel 2 and the respective tooth portions 51 of link plates 5 are distributed, and it is thereby possible to reduce the abrasion of the tooth portions 21 and 51, and prevent uneven abrasion of them.

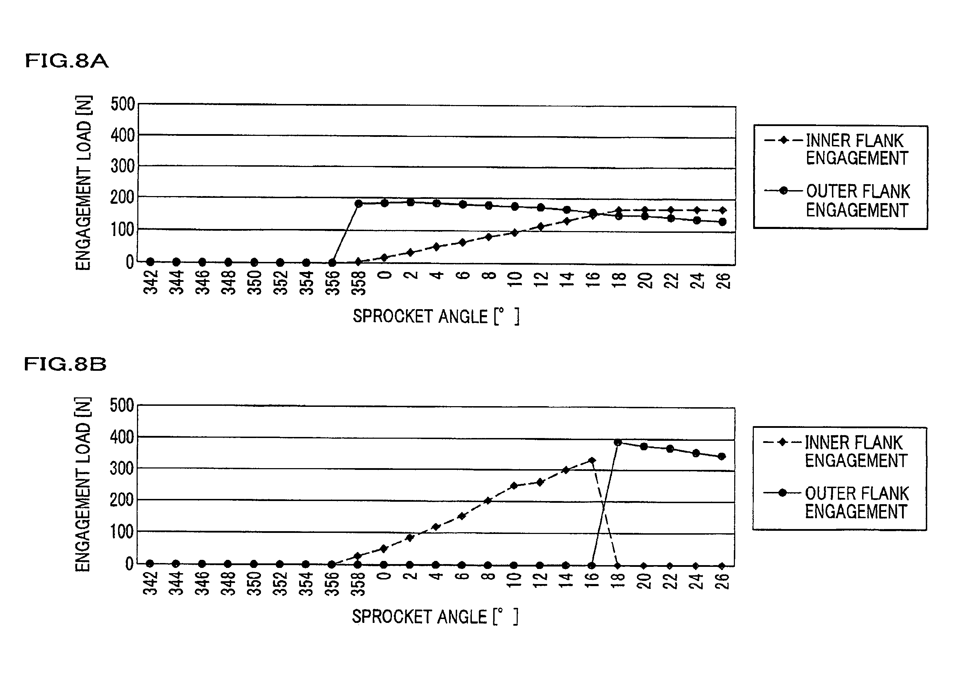

FIGS. 8A and 8B are graphs showing the transition of an engagement load that act between a tooth portion of a link plate and a tooth portion of the sprocket wheel, wherein FIG. 8A shows measurement values on the silent chain transmission in the present embodiment, and FIG. 8B shows measurement values on a conventional (Patent Document 1) silent chain transmission.

The graphs are shown such that the sprocket angle represented along the graph horizontal axis increases in the clockwise direction, with zero degree being defined by the state that the center of a tooth portion 21 (201), to which attention is paid, of the sprocket wheel 2 (200) is superposed with the reference line L, shown in FIG. 7. Further, the testing conditions of the both cases, such as the materials, dimensions, tensions, are equally set except the shapes of the tooth portions 51 of link plates 5 and the tooth portions 21 of the sprocket wheel 2.

As shown in FIG. 8B, in the conventional silent chain transmission, an inner flank surface 151b of a tooth portion 151 of a link plate 105 comes in contact with a tooth portion 201 of the sprocket wheel 200 (refer to FIG. 11) at a position where the rotation angle of the sprocket wheel 200 is 356 degrees. Then, the engagement load increases until the rotation angle becomes 16 degrees. Then, at the position where the rotation angle is 16 degrees, the outer flank surface 151 a of the tooth portion 151 of the link plate 5 that is ahead of the link plate 105 whose inner flank surface 151b is in contact, by the half of the length of a link plate 5, comes in contact with the tooth portion 201 of the sprocket wheel 200, and the inner flank surface 151b moves up off the tooth portion 201. Thus, the engagement load is transferred from the inner flank surface 151b to the outer flank surface 151 a.

Herein, the maximum load exceeded 300 N at the inner flank surface 151b, and was approximately 400 N at the outer flank surface 151a.

In contrast, as shown in FIG. 8A, in the silent chain transmission 1 in the present embodiment, four tooth portions 51, of the sprocket wheel 2, that are superposed along the lateral direction of the silent chain 3 simultaneously start contact with a tooth portion 21 of the sprocket wheel 2, at the position where the rotation angle of the sprocket wheel 2 is 356 degrees.

While the rotation angle of the sprocket wheel 2 is between 356 degrees and 16 degrees, the engagement load applied to the outer flank surfaces 51 a is larger, however, the engagement load applied to the inner flank surfaces 51b gradually grows, and the engagement load applied to the inner flank surfaces 51b is larger after the rotation angle of 16 degrees. The maximum value of engagement load is approximately 200N and is recognized to be smaller than the conventional case. Further, as engagement load is not transferred suddenly, it is understood that noises are generated faint, and abrasion hardly occurs.

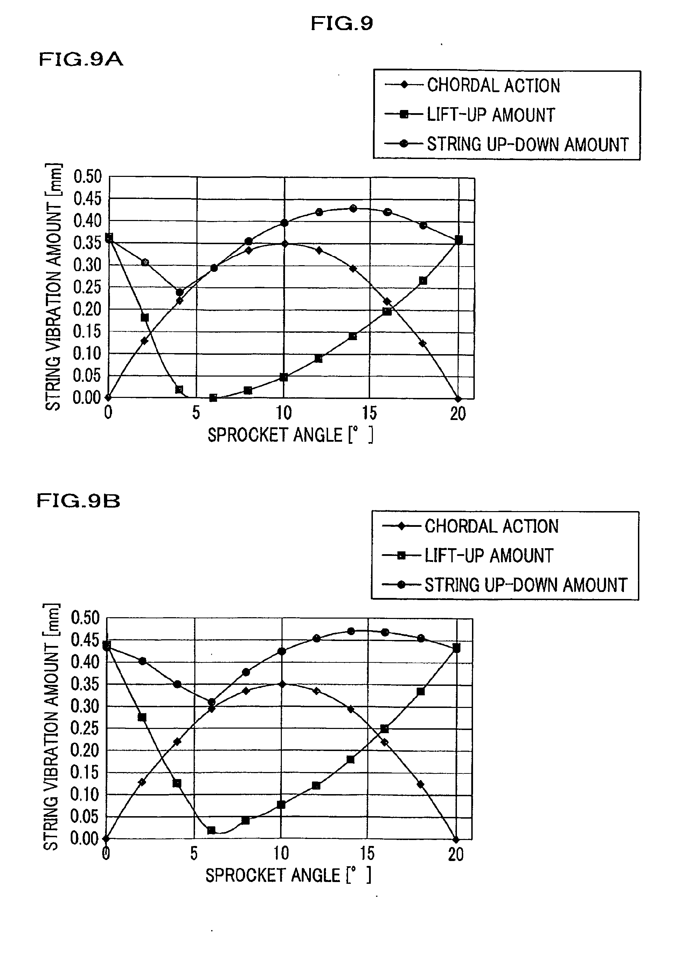

FIGS. 9A and 9B are graphs showing the relationship between the string vibration amount of the silent chain and the sprocket angle, wherein FIG. 9A shows measurement values on the silent chain transmission in the present embodiment, and FIG. 9B shows measurement values on the conventional (Patent Document 1) silent chain transmission. The string vibration amount is the total value of the chordal action and the lift-up amount.

As shown in FIG. 9B, the string vibration width is 0.16 mm, wherein the string vibration width is the difference between the maximum value (approximately 0.47 mm) and the minimum value (approximately 0.31 mm) of the string vibration amount of the conventional silent chain transmission.

On the other hand, as shown in FIG. 9A, the string vibration width is 0.19 mm, wherein the string vibration width is the difference between the maximum value (approximately 0.43 mm) and the minimum value (approximately 0.24 mm) of the string vibration amount of the silent chain transmission 1 in the present embodiment.

An embodiment in the best mode for carrying out the present invention has been described above, however, the invention is not limited thereto, and changes and modifications can be appropriately made without departing from the scope of the claims.

For example, the number of link plates 5 to be disposed along the lateral direction of the silent chain 3 is not particularly limited, and can be appropriately set, as necessary.

Examples

As shown in FIG. 3, with changes in the distance a from a line K connecting the centers p, p of the pin holes 52, 52 of a link plate 5 that forms the silent chain 3 to the inner flank central portion 51 c, and the distance $\beta$ from the line K to the tops 51 d of the tooth portions 51, measurement was performed on changes in the timing of engagement with the sprocket wheel 2.

Table 1 shows combinations of length $\alpha$ and length $\beta$ in the respective inventive examples and in the respective comparative examples, and shows the results of engagement timings.

TABLE 1

|  | α | β | RATIO | RESULT |
|---|---|---|---|---|
| COMPARATIVE EXAMPLE 1 | 1.553 | 5.345 | β=3.44α | INNER FLANK FIRST ENGAGES.<br><br>→ INNER FLANK AND OUTER FLANK GET SEATED. |
| INVENTIVE EXAMPLE 1 | 1.553 | 5.665 | β=3.65α | INNER FLANK AND OUTER FLANK SIMULTANEOUSLY ENGAGE.<br><br>→ INNER FLANK AND OUTER FLANK GET SEATED. |
| INVENTIVE EXAMPLE 2 | 1.553 | 5.805 | β=3.74α | INNER FLANK AND OUTER FLANK SIMULTANEOUSLY ENGAGE.<br><br>→ INNER FLANK AND OUTER FLANK GET SEATED. |
| COMPARATIVE EXAMPLE 2 | 1.323 | 5.118 | β=3.87α | INNER FLANK FIRST ENGAGES.<br><br>→ OUTER FLANK GETS SEATED. |
| COMPARATIVE EXAMPLE 3 | 1.250 | 5.118 | β=4.09α | INNER FLANK FIRST ENGAGES.<br><br>→ OUTER FLANK GETS SEATED. |

As shown in Table 1, in Inventive Example 1 and Inventive Example 2, the inner flank surface 51 b and the outer flank surface 51 a of a link plate 5 simultaneously starts engaging with a tooth portion 21 of the sprocket wheel 2. Accordingly, it does not occur that a contact point between the link plate 5 and the sprocket wheel 2 is switched from the inner flank surface 51b to the outer flank surface 51 a (or in a reverse order). Thus, noises are reduced. Further, as there are many contact points, a load is distributed, and abrasion is thereby reduced.

On the other hand, in Comparative Examples 2 and 3, at first, the inner flank surface 51b of a link plate 5 engages with a tooth portion 21 of the sprocket wheel 2, and then the outer flank surface 51 a of the link plate 5 gets seated on the sprocket wheel 2. Consequently, the contact point between the link plate 5 and the sprocket wheel 2 is switched from the inner flank surface 51b to the outer flank surface 51a (refer to FIG. 8B), and noises are accordingly generated. Further, as the number of contact points is smaller compared with those in Inventive Examples 1 and 2, load is concentrated and abrasion occurs to a greater extent.

Further, in Comparative Example 1, the inner flank surfaces 51b of a link plate 5 first engage with a tooth portion 21 of the sprocket wheel 2, and the link plate 5 thereafter gets seated on the sprocket wheel 2 at two inner flank surfaces 51b, 51b, and two outer flank surfaces 51a, 51a. Consequently, noises are generated at two timings, namely at the timing when the inner flank surfaces 51b engage, and at the timing when the outer flank surfaces 51a get seated, the effect for reducing noises is accordingly smaller, compared with the cases of Inventive Examples 1 and 2. Incidentally, in  Comparative Example 1, as a link plate 5 gets seated at the inner flank surfaces 51b and at the outer flank surfaces 51 a, load is distributed.

From the above description, it is understood that arrangement is preferably made such that the distance α from a line K connecting the centers p, p of the pin holes 52 of a link plate 5 to the inner flank central portion 51 c and the distance β from the line K to the tops 51d of the tooth portions 51 satisfy relationship expressed by $3.5\alpha \leq \beta \leq 3.8\alpha$.

Reference Numerals

1... silent chain transmission
2... sprocket wheel

21.. tooth portion
21a...outer flank seat portion
21b...inner flank seat portion
3...silent chain
31...link row
32...guide row
5...link plate
51...tooth portion
51a...outer flank surface
51b...inner flank surface
52...pin hole
6...connecting pin
7...guide plate
71...pin hole

## Claims

1. A silent chain transmission (1), comprising:

   a silent chain (3) formed by connecting a plurality of link plates (5) each of which has a pair of tooth portions (51) and a pair of pin holes (52) through which a connection pin (6) is loose-fitted, the paired tooth portions (51) and the paired pin holes (52) being formed in a forward-and-backward drive direction, the plurality of link plates (5) being connected in a continuous chain shape by the connection pins (5); and

   a sprocket wheel (2) having a plurality of tooth portions (21) at an outer circumferential portion thereof, wherein the plurality of tooth portions (21) engage with the tooth portions (51) of the silent chain (3), wherein an inner flank surface (51 b) of the front tooth portion of the each one link plate (5) and an outer flank surface (51 a) of the rear tooth portion of another link plate (5) that is ahead of the one link plate (5) simultaneously come in contact with the same engagement surface of one tooth portion (21) of the sprocket wheel (2), and engagement between the one link plate (5) and the sprocket wheel (2) thereby starts,

   wherein, accompanying rotation of the sprocket wheel (2), while contact of the inner flank surface (51 b) of the front tooth portion of the one link plate (5) and the outer flank surface (51 a) of the rear tooth portion of the other link plate (5) that is ahead of the one link plate (5), with the same engagement surface of the one tooth portion (21) of the sprocket wheel (2), is maintained, the outer flank surface (51a) of the rear tooth portion of the one link plate (5) and the inner flank surface (51b) of the front tooth portion of another link plate (5) that is behind the one link plate (5) simultaneously come in contact with the same engagement surface of another tooth portion (21) of the sprocket wheel (2) that is behind the one tooth portion (21) of the sprocket wheel (2),

   **characterized in that**

   in order that the one link plate (5) thereby gets seated on the sprocket wheel (2), a distance $\alpha$ from a line (K) which connects centers (P) of the pin holes (52) of the one link plate (5) to a center (51c) of the inner flank surface (51 b) and a distance $\beta$ from the line (K) which connects the centers (P) of the pin holes (52) of the one pin plate (5) to tops (51d) of the tooth portions (51), satisfy a relationship expressed by $3.5\alpha \leq \beta \leq 3.8\alpha$.

2. The silent chain transmission according to claim 1,
   wherein, before the silent chain (3) is curved by the sprocket wheel (2), the inner flank surface (51b) of the front tooth portion of the one link plate and the outer flank surface (51 a) of the rear tooth portion of the other link plate that is ahead of the one link plate simultaneously come in contact with the one tooth portion (21) of the sprocket wheel (2).

3. The silent chain transmission according to claim 1 or 2,
   wherein the silent chain (3) includes a plurality of link rows (31) each having two or one link plate (5), and a plurality of guide rows (32) each having two guide plates (7) and two or more link plates (5),
   and wherein the plurality of link rows (31) and the plurality of guide rows (32) are connected through pins (6) alternatively and in a continuous chain form.

4. The silent chain transmission according to any of claims 1 to 3,
   wherein a thickness of the link plates (5) of the link rows (31) of the silent chain (3) is larger than a thickness of the guide plates (7) of the guide rows (32) and larger than a thickness of the link plates (5) of the guide rows (32).

**5.** The silent chain transmission according to any of claims 1 to 4,
wherein a total thickness of the link plates (5) of the link rows (51) is  equal to a total thickness of the guide plates (7) and the link plates (5) of the guide rows (32).

**6.** The silent chain transmission according to any of claims 1 to 5,
wherein the same engagement surface of each tooth portion (21) of the sprocket wheel (22) is provided with an inner flank seat portion (21 b) where the inner flank surface (51 b) of the front tooth portion of the each one linkplate (5) gets seated, and an outer flank seat portion (21 a) where the outer flank surface (51a) of the rear tooth portion of another link plate that is ahead of the one link plate (5) gets seated.

**7.** The silent chain transmission according to claim 6,
wherein each outer flank seat portion (21 a) of the sprocket wheel (2) has a shape that is created using a rack, for outer flanks, having the same shape as an outer shape of tooth portions, the outer shape being formed by linearly aligning virtual outer flank link plates whose inner flank surfaces and outer flank surfaces are formed in the same shape as the outer flank surfaces (51a) of the link plates (5),
and wherein each inner flank seat portion (21 b) of the sprocket wheel (2) has a shape that is created using a rack, for inner flanks, having the same shape as an outer shape of tooth portions, the outer shape being formed by linearly aligning virtual inner flank link plates whose inner flank surfaces and outer flank surfaces are formed in the same shape as the inner flank surfaces (51 b) of the link plates (5).

## Patentansprüche

**1.** Geräuscharmes Kettengetriebe (1), umfassend:

eine geräuscharme Kette (3), die durch Verbinden einer Mehrzahl von Gliedplatten (5), deren jede ein Paar von Zahnabschnitten (51) und ein Paar von Bolzenlöchern (52) aufweist, durch die ein Verbindungsbolzen (6) lose eingesetzt ist, gebildet ist, wobei die paarigen Zahnabschnitte (51) und die paarigen Bolzenlöcher (52) in Vorwärts- und
Rückwärtsantriebsrichtung ausgebildet sind, wobei die Mehrzahl von Gliedplatten (5) durch die Verbindungsbolzen (5) zu einer durchgehenden Kettenform verbunden sind; und
ein Kettenrad (2), das an seinem Außenumfangsabschnitt eine Mehrzahl von Zahnabschnitten (21) aufweist, worin die Mehrzahl von Zahnabschnitten (21) mit den Zahnabschnitten (51) der geräuscharmen Kette (3) in Eingriff stehen,
worin eine innere Flankenoberfläche (51 b) des vorderen Zahnabschnitts jeder einer Gliedplatte (5) und eine äußere Flankenoberfläche (51 a) des hinteren Zahnabschnitts einer anderen Gliedplatte (5), die vor der einen Gliedplatte (5) ist, mit der gleichen Eingriffsoberfläche des einen Zahnabschnitts (21) des Kettenrads (2) gleichzeitig in Kontakt kommen, und hierdurch der Eingriff zwischen der einen Gliedplatte (5) und dem Kettenrad (2) beginnt,
worin einhergehend mit der Drehung des Kettenrads (2), während der Kontakt der inneren Flankenoberfläche (51 b) des vorderen Zahnabschnitts der einen Gliedplatte (5) und der äußeren Flankenoberfläche (51a) des hinteren Zahnabschnitts der anderen Gliedplatte (5), die vor der einen Gliedplatte (5) ist, mit der gleichen Eingriffsoberfläche des einen Zahnabschnitts (21) des Kettenrads (2) beibehalten wird, wobei die äußere Flankenoberfläche (51 a) des hinteren Zahnabschnitts der  einen Gliedplatte (5) und die innere Flankenoberfläche (51 b) des vorderen Zahnabschnitts der anderen Gliedplatte (5), die hinter der einen Gliedplatte (5) ist, mit der gleichen Eingriffsoberfläche eines anderen Zahnabschnitts (21) des Kettenrads (2), der hinter dem einen Zahnabschnitt (21) des Kettenrads (2) ist, gleichzeitig in Kontakt kommen,
**dadurch gekennzeichnet, dass**, damit die eine Gliedplatte (5) auf dem Kettenrad (2) aufsitzt, ein Abstand $\alpha$ von eine Linie (K), die Mitten (P) der Bolzenlöcher (52) der einen Gliedplatte (5) mit einer Mitte (51 c) der inneren Flankenoberfläche (51 b) verbindet, und ein Abstand $\beta$ von der Linie (K), die die Mitten (P) der Bolzenlöcher (52) der einen Bolzenplatte (5) mit Oberseiten (51d) der Zahnabschnitte (51) verbindet, einer Beziehung genügen, die ausgedrückt ist durch $3{,}5\alpha \leq \beta \leq 3{,}8\alpha$.

**2.** Das geräuscharme Kettengetriebe nach Anspruch 1, worin, bevor die geräuscharme Kette (3) durch das Kettenrad (2) gekrümmt wird, die innere Flankenoberfläche (51 b) des vorderen Zahnabschnitts der einen Gliedplatte und die äußere Flankenoberfläche (51 a) des hinteren Zahnabschnitts der anderen Gliedplatte, die vor der einen Gliedplatte ist, mit dem einen Zahnabschnitt (21) des Kettenrads (2) rechtzeitig in Kontakt kommt.

3. Das geräuscharme Kettengetriebe nach Anspruch 1 oder 2, worin die geräuscharme Kette (3) eine Mehrzahl von Gliedreihen (31), die jeweils zwei oder eine Gliedplatte (5) aufweisen, und eine Mehrzahl von Führungsreihen (32), die jeweils zwei Führungsplatten (7) und zwei oder mehr Gliedplatten (5) aufweisen, enthält, und worin die Mehrzahl von Gliedreihen (31) und die Mehrzahl von Führungsreihen (32) durch Bolzen (6) abwechselnd und in kontinuierlicher Kettenform verbunden sind.

4. Das geräuscharme Kettengetriebe nach einem der Ansprüche 1 bis 3, worin eine Dicke der Gliedplatten (5) der Gliedreihen (31) der geräuscharmen Kette (3) größer ist als eine Dicke der Führungsplatten (7) der Führungsreihen (32) und größer als eine Dicke der Gliedplatten (5) der Führungsreihen (32).

5. Das geräuscharme Kettengetriebe nach einem der Ansprüche 1 bis 4, worin eine gesamte Dicke der Gliedplatten (5) der Gliedreihen (51) gleich einer Gesamtdicke der Führungsplatten (7) und der Gliedplatten (5) der Führungsreihen (32) ist.

6. Das geräuscharme Kettengetriebe nach einem der Ansprüche 1 bis 5, worin die gleiche Eingriffsoberfläche jedes Zahnabschnitts (21) des Kettenrads (22) versehen ist mit einem inneren Flankensitzabschnitt (21 b), wo die innere Flankenoberfläche (51 b) des vorderen Zahnabschnitts jeder einen Gliedplatte (5) aufsitzt, und einem äußeren Flankensitzabschnitt (21 a), wo die äußere Flankenoberfläche (51 a) des hinteren Zahnabschnitts einer anderen Gliedplatte, die vor der einen Gliedplatte (5) ist, aufsitzt.

7. Das geräuscharme Kettengetriebe nach Anspruch 6, worin jeder äußere Flankensitzabschnitt (21 a) des Kettenrads (2) eine Form hat, die unter Verwendung einer Zahnstange für äußere Flanken erzeugt wird, welche die gleiche Form wie eine äußere Form der Zahnabschnitte hat, wobei die äußere Form durch lineares Ausrichten von virtuellen äußeren Flankgliedplatten gebildet wird, deren innere Flankenoberflächen und äußere Flankenoberflächen in der gleichen Form wie die äußeren Flankenoberflächen (51a) der Gliedplatten (5) gebildet werden, und worin jeder innere Flankensitzabschnitt (21 b) des Kettenrads (2) eine Form hat, die unter Verwendung einer Zahnstange für innere Flanken erzeugt wird, welche die gleiche Form wie eine äußere Form der Zahnabschnitte hat, wobei die äußere Form durch lineares Ausrichten von virtuellen inneren Flankengliedplatten gebildet wird, deren innere Flankenoberflächen und äußere Flankenoberflächen in der gleichen Form wie die inneren Flankenoberflächen (51 b) der Gliedplatten (5) gebildet werden.

## Revendications

1. Une transmission de chaîne silencieuse (1), comprenant :

une chaîne silencieuse (3) formée en reliant plusieurs plaques de liaison (5) dont chacune possède une paire de portions dentées (51) et une paire de trous de broche (52) dans lesquels est insérée une broche de connexion (6) sans être ajustée, les portions dentées appariées (51) et les trous de broche appariés (52) étant formés dans une direction d'entraînement d'avant en arrière, les plusieurs plaques de liaison (5) étant reliées dans une forme de chaîne continue par les broches de connexion (6); et

un pignon denté (2) possédant plusieurs portions dentées (21) sur une partie circonférentielle externe de celui-ci, dans lequel les plusieurs portions dentées (21) entrent en prise avec les portions dentées (51) de la chaîne silencieuse (3),

dans laquelle une surface de flanc interne (51 b) de la portion dentée avant de chaque plaque de liaison (5) et une surface de flanc externe (51a) de la portion dentée postérieure d'une autre plaque de liaison (5) qui se trouve devant ladite plaque de liaison (5) entrent en contact simultanément avec la même surface d'engrènement d'une portion dentée (21) du pignon denté (2) et l'engrènement entre ladite plaque de liaison (5) et le pignon denté (2) est ainsi établi,

dans laquelle, en accompagnant la rotation du pignon denté (2), tandis que le contact de la surface de flanc interne (51b) de la portion dentée antérieure de ladite plaque de liaison (5) et la surface de flanc externe (51a) de la portion dentée postérieure de l'autre plaque de liaison (5) qui se trouve devant la première plaque de liaison (5) est maintenu avec la même surface d'engrènement d'une portion dentée (21) du pignon denté (2), la surface de flanc externe (51a) de la portion dentée postérieure de l'une des plaques de liaison (5) et la surface de flanc interne (51b) de la portion dentée antérieure d'une autre plaque de liaison (5) qui se trouve derrière la première plaque de liaison (5) entrent en contact simultanément avec la même surface d'engrènement d'une autre portion dentée (21) du pignon denté (2) qui se trouve derrière ladite portion dentée (21) du pignon denté (2), **caractérisée en ce que**,

afin que l'une des plaques de liaison (5) se loge de cette manière sur le pignon denté (2), une distance $\alpha$ d'une ligne (K) qui relie les centres (P) des trous de broche (52) de l'une des plaques de liaison (5) à un centre (51c) de la surface de flanc interne (51b) et une distance $\beta$ de la ligne (K) qui relie les centres (P) des trous de broche (52) d'une plaque de broche (5) aux sommets (51d) des portions dentées (51) satisfont à une relation exprimée par $3{,}5\alpha \leq \beta \leq 3{,}8\alpha$.

2. La transmission à chaîne silencieuse selon la revendication 1,
dans laquelle, avant que la chaîne silencieuse (3) ne soit courbée par le pignon denté (2), la surface de flanc interne (51b) de la portion dentée antérieure de l'une des plaques de liaison et la surface de flanc externe (51 a) de la portion dentée postérieure de l'autre plaque de liaison qui se trouve devant la première plaque de liaison entrent en contact simultanément avec la portion dentée (21) du pignon denté (2).

3. La transmission à chaîne silencieuse selon l'une des revendications 1 ou 2,
dans laquelle la chaîne silencieuse (3) comprend plusieurs rangées de liaison (31) possédant chacune deux ou une plaques de liaison (5) et plusieurs rangées de guidage (32) possédant chacune deux plaques de guidage (7) et deux plaques de liaison (5) ou plus, et dans laquelle les plusieurs rangées de liaison (31) et les plusieurs rangées de guidage (32) sont reliées par l'intermédiaire de broches (6) alternativement et sous forme de chaîne continue.

4. La transmission à chaîne silencieuse selon l'une des revendications 1 à 3, dans laquelle une épaisseur des plaques de liaison (5) des rangées de liaison (31) de la chaîne silencieuse (3) est plus grande qu'une épaisseur des plaques de guidage (7) des rangées de guidage (32) et plus grande qu'une épaisseur des plaques de liaison (5) des rangées de guidage (32).

5. La transmission à chaîne silencieuse selon l'une des revendications 1 à 4,
dans laquelle une épaisseur totale des plaques de liaison (5) des rangées de liaison (51) est égale à une épaisseur totale des plaques de guidage (7) et des plaques de liaison (5) des rangées de guidage (32).

6. La transmission à chaîne silencieuse selon l'une des revendications 1 à 5,
dans laquelle la même surface d'engrènement de chaque portion dentée (21) du pignon denté (22) est dotée d'une portion de logement du flanc interne (21 b) dans laquelle la surface de flanc interne (51 b) de la portion dentée antérieure de chaque plaque de liaison (5) vient se loger et une portion de logement du flanc externe (21a) dans laquelle la surface de flanc externe (51a) de la portion dentée postérieure d'une autre plaque de liaison qui se trouve devant la plaque de liaison (5) vient se loger.

7. La transmission à chaîne silencieuse selon la revendication 6,
dans laquelle chaque partie de logement du flanc externe (21 a) du pignon denté (2) a une forme qui est créée en utilisant une crémaillère, pour les flancs externes, possédant la même forme qu'une forme externe des portions dentées, la forme externe étant formée par alignement linéaire des plaques de liaison du flanc externe virtuel dont les surfaces de flanc interne et les surfaces de flanc externe sont formées dans la même forme que les surfaces de flanc externe (51a) des plaques de liaison (5),
et dans laquelle chaque portion de logement du flanc interne (21 b) du pignon denté (2) possède une forme qui est créée en utilisant une crémaillère, pour les flancs internes, possédant la même forme qu'une forme externe des portions dentées, la forme externe étant formée par alignement linéaire des plaques de liaison du flanc interne virtuel dont les surfaces de flanc interne et les surfaces de flanc externe sont formées dans la même forme que les surfaces de flanc interne (51b) des plaques de liaison (5).

# FIG.1

**FIG.2A**

**FIG.2B**

**FIG.2C**

## FIG.3

## FIG.4

**FIG.5A**

8B

8

8C

8D

8C

8A

**FIG.5B**

8   8   8

8C  8A  8D  8C,8D  8A  8D,8C  8A  8C,8D  8D  8A  8C

**FIG.5C**

C

80

FIG.6A

9B

9

9C

9D

9A

9C

FIG.6B

9          9          9

9C  9A  9D  9C,9D  9A  9D,9C  9A  9C,9D  9D  9A  9C

FIG.6C

C

90

FIG.7A

FIG.7B

FIG.7C

FIG.8A

FIG.8B

## FIG.9

### FIG.9A

### FIG.9B

# FIG.10A

# FIG.10B

FIG.11A

FIG.11B

**REFERENCES CITED IN THE DESCRIPTION**

**Patent documents cited in the description**

- JP 3585463 B
- JP 2003202056 A
- US 2003125146 A1